# EUROPEAN PATENT APPLICATION

(11) **EP 4 219 433 A1**
(43) Date of publication of application: **02.08.2023**
(21) Application number: 23153300.1
(22) Date of filing: 25.01.2023
(51) Int. Cl.: C05F 17/10, C05F 17/20, C05F 17/50

(54) **BIO-STIMULANT AND METHOD OF PRODUCING SAME**

(30) Priority: 27.01.2022 US 202217585952
(71) Applicant: Farment Bio Solutions Ltd, Vernon, BC V1T 2Y3 (CA)
(72) Inventor: LETT, Ralph Jeffrey, Vernon, V1T 2Y3 (CA)
(74) Representative: Forresters IP LLP

(57) **Abstract**

Methods of producing a bio-stimulant by fermentation and methods of producing a fertilizer composition using the bio-stimulant are disclosed. Fertilizer compositions comprising the fermented bio-stimulant are also disclosed. The fermented bio-stimulant contains a plurality of microorganisms which originate from a natural environment such as the soil and humus of a thriving plant. In some embodiments, the fertilizer compositions comprise a carbon nanomaterial such as carbon nanotubes (CNTs).

## Description

### Cross-reference to Related Applications

This application is a continuation-in-part of US Patent Application No. US 16/040,048, filed July 19, 2018, entitled "Bio-Stimulant and Method of Producing Same", which claims priority from U.S. Provisional Application No. 62/535,109, filed July 20, 2017, entitled: "Soil Inoculant and Method of Producing Same" and Canadian Patent Application No. 2,973,961 filed July 20, 2017, entitled: "Soil Inoculant and Method of Producing Same" and U.S. Provisional Application No. 62/635,984, filed February 27, 2018, entitled "Bio-Stimulant and Method of Producing Same" and Canadian Patent Application No. 2,996,590 filed February 27, 2018, entitled "Bio-Stimulant and Method of Producing Same". All of the applications referenced in this paragraph are hereby incorporated herein by reference.

### Field of the Invention

The present disclosure relates to a bio-stimulant product for inoculating soil or other environment and methods for producing same; in particular, the present disclosure relates to bio-stimulant products for introducing a diverse plurality of a group of beneficial microorganisms to a soil or other environment.

### Background of the Invention

In cultivating plants or trees, it is known that soil additives, commonly referred to as soil inoculants or bio-stimulants may be used to introduce beneficial microorganisms to the soil or growing medium of the plants, thereby promoting the growth and health of the plants being cultivated in that soil or growing medium. Plant health and growth is dependent on healthy soil biology. Beneficial microorganisms live in a symbiotic relationship with plants, supplying moisture and nutrients from the soil, and forming a natural defence system around the roots of plants, in exchange for glucose. For example, a class of fungi known as mycorrhizal fungi, effectively extend the surface area of the plant's root systems, thereby increasing the absorption of water and nutrients from the soil. A further example of a beneficial microorganism that exists in symbiosis with plants is a root colonizing species of bacteria known as rhizobacteria. Rhizobacteria inhabit the roots of plants, blocking disease causing bacteria from infecting the plant.

Although beneficial microorganisms may naturally be present in soil, the use of synthetic fertilizers has led to few beneficial microorganisms remaining in soil. Thus, it may be desirable to amend soil so as to introduce beneficial microorganisms, for example by using a bio-stimulant containing a diverse plurality of groups of beneficial microorganisms, comprising of bacteria, yeast and mold (fungi). Various different types of soil inoculants and bio-stimulants are available in the market, produced by various processes, some of which include first cultivating microorganisms on a host plant, and then harvesting the microorganisms from the host plant and processing it to thereby incorporate it into a soil inoculant product. For example, in patent application number PCT/ZA2008/000060 by inventor Venter (the '060 patent application), a method of producing endomycorrhiza inoculum involves cultivating endomycorrhiza spores on roots of a host plant in a growing medium and sequences of steps to separate the spores and producing a spore concentrate on a carrier. Specifically, the process embodiments described in the '060 patent application include removing a host plant from a growth medium and processing the growth medium containing spores and hyphae by washing it thoroughly with water or aqueous liquid, separating any root matter and coarse debris from the spore-containing liquid, separating the spores from the liquid, and mixing the spores with a fine absorbent carrier powder to obtain a nearly dry powder mixture. The carrier powder may include a fine zeolite powder and/or one or more clay minerals.

In patent application number PCT/ZA02/00046 by inventors Hilditch et al (the '046 patent application), a method of preparing a growth substrate for use in plant inoculation includes the steps of obtaining a viable source of microorganism, growing the microorganism in proximity to one or more propagative host plant root systems so as to encourage development of a symbiotic association between the microorganism and the propagative host plant root systems, supporting the microorganism and the propagative host plant root systems in a support medium being a suitable zeolite such as capezeo, allowing the microorganism to sporulate, terminating the growth of the propagative host plant root systems, allowing the microorganism tempter state of dormancy in response to the termination of growth of the propagative host plant root systems, and separating the microorganism, associated propagative host plant root systems and supports medium from the remainder of the propagative host plant.

In U.S. Pat. No. 8,728,460 by inventor Spittle (the '460 patent), a soil treatment composition is described which includes combining beneficial soil fungi and bacteria in a growth promoting nutrient medium and embedding it in an organic porous ceramic particle for direct delivery during soil aerification. The process of manufacturing the soil treatment composition, as described in the '460 patent, includes spraying the porous carrier particles with a biological soil treatment composition. Carbohydrates and other food sources for the dormant bacteria and fungi are included to increase the colony forming of the organisms.

In European patent application number 93913523.2 by inventor Sakai et al (the '523 patent application), a process for producing a substance inoculated with a vesicular arbuscular mycorrhizae (VAM) fungus is disclosed, which comprises cultivating a plant infected with a VAM fungus belonging to the genus Gigaspora by using a base material comprising calcined amber loam, or a mixture of calcined amber loam and calcined attapulgite, to thereby proliferate the VAM fungus. The process prepares a substance inoculated with a VAM fungus. Examples of carriers may include, for example, zeolite, foam clay, talc, pearlite, vermiculite, calcined amber loam, pumice, limestone, soil, sand, coke and peat moss. So as to prevent contamination of the carrier with indigenous microbes, the carrier is subjected to sterilization (including calcination) prior to its use. A sterilized soil or a calcined amber loam is preferably used. After the spore density has come to be sufficiently high, the use calcined amber loam or other carrier is recovered to isolate the formed VAM inoculant, which is optionally dried if desired to obtain the final inoculant product. In the examples given in the '523 patent application, the host plants are grown for a period of 16 weeks after transplantation before the soil inoculants were produced from the used calcined amber loam or other carriers.

### Summary

The present disclosure relates to a bio-stimulant product and a method for producing same. The bio-stimulant product may be used to add beneficial microorganisms, such as bacteria, yeast, and fungal spores or fungi, and/or micronutrients, to soil, seed, compost, top dress, or other growth medium. The bio-stimulant product itself, produced by any of the processes disclosed herein, has beneficial advantages, and is itself intended to fall within the scope of the present disclosure. The bio-stimulant product functions as a biological pesticide and biological growth enhancer.

In one embodiment of the present disclosure, a method for producing a bio-stimulant product containing a diverse plurality of groups of microorganisms as well as other micronutrients includes using a starting material having sufficient amounts of beneficial microorganisms and, optionally, a desired mixture of micronutrients. The starting material is a microbial sample obtained from a natural environment. The starting material may be, without intending to be limiting, humus, or soil from a thriving plant. The starting material is mixed together with water and an appropriate carbohydrate, for example a starchy carbohydrate, so as to fuel and facilitate the growth of the microorganisms. The aqueous starting material/carbohydrate mixture is left in the dark for approximately one week. A second carbohydrate, for example, sugar or molasses is then added to the mixture and the mixture is again placed in the dark for another two to four weeks allowing it to ferment, which turns the mixture into a water soluble, viscous mixture. A carrier, such as zeolite, biochar, woodchips, or diatomaceous earth may then be added, causing the diverse plurality of groups of microorganisms, as well as any available micronutrients, to become absorbed and/or adsorbed into the pores of the carrier and then the carrier is separated from the aqueous mixture and dried, preferably in the dark. Water may also be used as a carrier, eliminating the drying the carrier from not absorbed bio-stimulant.

In another aspect of the present disclosure, customized bio-stimulant products may be produced for particular applications. For example, certain species of beneficial bacteria and fungi may be particularly beneficial to certain types of plants, and so a bio-stimulant product may be customized so as to provide those particular bacterial and fungal species, in some embodiments also producing a particular ratio of those species, as well as customizing the particular types of micronutrients in accordance with the particular plant to be grown in the inoculated growth medium or soil. The bio-stimulant product may further be customized to have either an acidic, basic, or neutral pH by varying the carrier used, achieving the optimal pH environment for the plant to be grown using the bio-stimulant. For example, once inoculated, zeolite and diatomaceous earth are neutral, water and woodchips are acidic, and biochar is alkaline. If an alkaline pH environment is optimal for the plant's health and growth, biochar would be the most suitable carrier.

In further aspects of the present disclosure, the bio-stimulant product may be used to boost the immune system of animals, by increasing the number of beneficial microorganisms inhabiting the animal's skin, fur, feathers, or intestine. Further, the bio-stimulant product may be used to clean a production facility, for example a barn.

In other aspects of the present disclosure, the bio-stimulant product may be used for the treatment of manure, transforming the waste into a useable fertilizer and agriculture product. The method of using the bio-stimulant product for the treatment of waste is provided, the method comprising: applying a bio-stimulant product to manure for a first time interval; running the bio-stimulant and manure mixture through an apparatus adapted to apply centrifugal force; wherein the bio-stimulant, manure mixture is separated into a solid and a liquid component. The solid component, containing potassium, phosphate, and nitrogen may be used as a fertilizer, while the liquid component, containing high concentrations of potassium may have many uses in agriculture.

In some embodiments of the present disclosure, a method of producing a bio-stimulant product is provided, the method comprising: preparing a first mixture comprising a starting material including one or more microorganisms, a first carbohydrate and water; placing the first mixture in a microorganism growth environment for a first time interval; preparing a second mixture by adding a second carbohydrate to the first mixture; placing the second mixture in a fermentation environment for a second time interval so as to produce the bio-stimulant. The starting material is obtained from a natural environment. The starting material may for example be soil or humus.

In some embodiments, the microorganisms contained in the bio-stimulant originate from the natural environment. In some embodiments, the microorganisms contained in the bio-stimulant product consist essentially of microorganisms that originate from the natural environment. In such embodiments, the bio-stimulant product does not include microorganisms that have been grown under laboratory conditions.

The microorganisms contained in the bio-stimulant may comprise facultative anerobic microorganisms. In some embodiments, the microorganisms contained in the bio-stimulant consist essentially of facultative anerobic microorganisms.

In some embodiments of the present dsclosure, a method of preparing fertilizer compositions using the bio-stimulant produced by aspects of the present disclosure. The method comprises: preparing water to reduce a pH of the water; preparing a third mixture by mixing the bio-stimulant and a third carbohydrate with the prepared water; fermenting the third mixture to produce a fermented mixture for a third time interval; and adding one or more fertilizer ingredients to the third mixture before the step of fermenting the third mixture and/or to the fermented mixture after the step of fermenting the third mixture. In some embodiments, a carbon nanomaterial such as a carbon nanotube (CNT) is added prior to the step of fermentation. The carbon nanotube (CNT) may be treated by a suitable mechanical means to disperse the nanocarbons such as by sonication. The carbon nanotube may be dispersed in cellulose. In some embodiments, the method further comprises incubating the fermented mixture with the one or more fertilizer ingredients at an incubation temperature for a fourth time interval. The incubation step may be performed under anaerobic conditions.

Further aspects of the present disclosure relate to fertilizer compositions which include a fermented bio-stimulant product. The fermented bio-stimulant product comprises a diverse plurality of groups of microorganisms and optionally a carrier. The microorganisms contained in the fermented bio-stimulant product originate from a natural environment. The fermented bio-stimulant product may comprise a carbon nanomaterial held in suspension.

Further aspects of the invention and features of specific embodiments of the invention are described below.

### Brief Description of the Drawings

Exemplary embodiments are illustrated in referenced figures of the drawings. It is intended that the embodiments and figures disclosed herein are to be considered illustrative rather than restrictive.
Figure 1 is a flow chart illustrating a method of preparing a bio-stimulant according to an embodiment.
Figure 2 is a flow chart illustrating a method of preparing a fertilizer composition using the biostimulant prepared by the method of Figure 1.
Figure 3 is a flow chart illustrating a first example method of preparing a fertilizer composition using the biostimulant prepared by the method of Figure 1.
Figure 4 is a flow chart illustrating a second example method of preparing a fertilizer composition using the biostimulant prepared by the method of Figure 1.
Figure 5 is a flow chart illustrating a third example method of preparing a fertilizer composition using the biostimulant prepared by the method of Figure 1.
Figure 6 is a flow chart illustrating a fourth example method of preparing a fertilizer composition using the biostimulant prepared by the method of Figure 1.
Figure 7 is a flow chart illustrating a fifth example method of preparing a fertilizer composition using the biostimulant prepared by the method of Figure 1.

### Detailed Description

The methods and processes disclosed herein provide for the preparation and customization of bio-stimulants containing a diverse plurality of a group of microorganisms for various different applications. Beneficial microorganisms promote the growing process and in addition play a role in disease suppression. In one aspect of the present disclosure, a bio-stimulant may be prepared containing one or more groups of microorganisms, for example, which promote the growth of plants and trees by forming in the soil a symbiotic relationship between the microorganisms and the plants or trees underneath the soil. The diverse group of microorganisms found in the bio-stimulant, such as photosynthesizing bacteria, lactic acid bacteria, and yeasts, allow the microorganisms to survive in the soil environment and work synergistically to suppress the presence of harmful microorganisms.

In a preferred embodiment of the present disclosure, the bio-stimulant product includes photosynthesizing bacteria and lactobacillus bacteria, fermenting fungi and yeast, which function to fix nitrogen, solubilize phosphorus, and exert biocontrol.

As is known, beneficial microorganisms promote the healthy growth and development of plants and trees in soil, or other growth media, and are naturally present in soils with high organic material content. (The terms soil and growth medium are used interchangeably in the present disclosure). However, in agricultural and other environments the soil may be depleted of naturally occurring beneficial microorganisms over time, for example, through the use of synthetic fertilizers, thereby requiring reintroduction of the beneficial microorganisms to the soil so as to promote healthy plant growth. The diverse combination of microorganisms in the bio-stimulant product helps restore a healthy balance of microorganisms in the soil. Furthermore, micronutrients are essential to the healthy growth and development of various plants and trees. Similarly, while such micronutrients are often found in the natural environment, they may be depleted in certain areas over time where the soil has been used many times for growing plants or trees, for example on agricultural plots or in residential areas, and also thereby may require the addition or re-introduction of such micronutrients into the soil being used for growing plants.

In other prior art processes for producing bio-stimulants containing beneficial microorganisms, of which the applicant is aware, such processes usually involve cultivating the microorganisms on a host plant, typically for a period of several weeks, and then harvesting the microorganisms from the host plant to produce the bio-stimulant. In the processes and methods disclosed herein, by identifying a starting material which contains a group of beneficial microorganisms and which is preferably void of contaminants, such as harmful bacteria, the applicant has discovered that there are processes by which beneficial microorganisms may be cultivated directly from the starting material, without having to use host plants to cultivate the microorganisms over a period of weeks, and without the use of bioreactors and the like. Advantageously, the processes disclosed herein may therefore cost less and take less time to produce the bio-stimulant with desired concentrations of beneficial microorganisms for use in soil microorganism reintroduction. Furthermore, the applicant has found that the processes disclosed herein require fewer steps, in comparison to other processes, because it is not necessary to first separate microorganisms from the host plants in order to produce the bio-stimulant. Advantageously, in some embodiments of the present disclosure, it may be the case that the beneficial microorganism concentration of the bio-stimulants produced in the present processes disclosed herein may exceed the concentrations produced using other methods. Furthermore, the beneficial microorganisms included in the process may be customizable for the plant to be grown, by choosing an appropriate starting material, as described in further detail below.

### The Bio-stimulant Product and Methods of Making Same

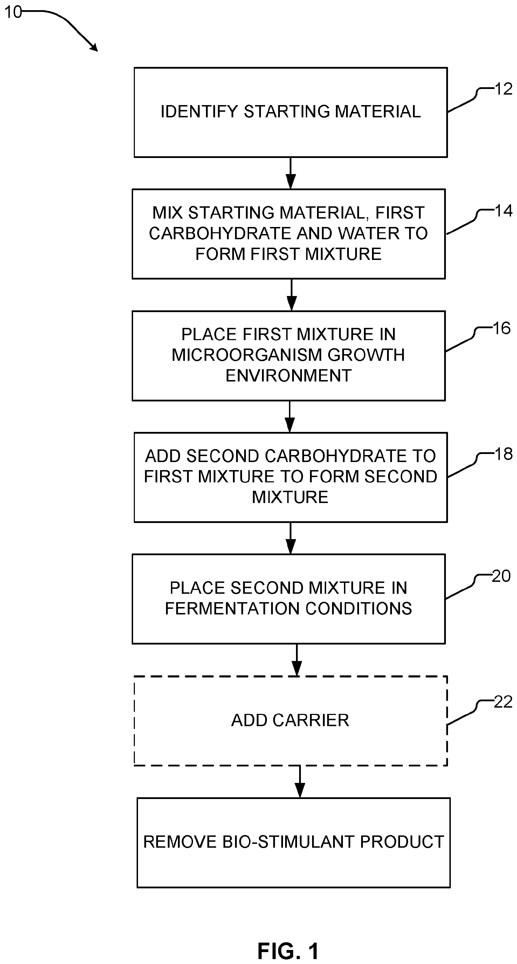

Figure 1 illustrates a method for producing bio-stimulants according to an example embodiment. Referring to Figure 1, the method for producing bio-stimulants (step 10) includes identifying an appropriate starting material (step 12). The starting material is a microbial sample obtained from a natural environment. A natural environment comprises microorganisms that exist in their natural ecosystems and excludes the presence of laboratory microorganisms. Laboratory microorganisms are micoorganisms that are grown under laboratory conditions. Such conditions are typically optimized to favour the growth of certain microorganisms. Different plants are adapted to grow in different soil compositions, and growing them in the wrong type of soil can be harmful to their health and growth. Healthy soil is the basis for a healthy and strong plant. Thus, the starting material may be chosen based on the plant intended to be grown. For example, and without intending to be limiting, if the targeted plant is a blueberry bush, the starting material may be taken from the soil of a blueberry bush that is a healthy, high yielding plant. The soil from a healthy blueberry bush will contain the diverse plurality of a group of microorganisms and nutrients necessary for enhancing the growth of subsequent blueberry plants.

A further example of an appropriate starting material, for bio-stimulants designed to reintroduce beneficial microorganisms into the soil for promoting plant growth, may include compost or humus, which contains the desired level of living biological activity. Compost or humus may contain microorganisms such as, lactobacillus, phosphate solubilizing bacteria, photosynthesizing bacteria and fermenting fungi and yeast. The compost or humus may contain one type of organic materials or a blend of different types or species of organic materials. Examples of suitable organic materials include for example plant materials such as leaves and grass, food waste such as fruit and vegetable peels, wood chips, or any other suitable compostable materials. In one example embodiment, the starting material is a decomposed leaf litter. Additionally, such starting materials may also include different mixtures of certain micronutrients which are desirable for promoting healthy plant growth. Without intending to be limiting, in some embodiments of the present disclosure, for example, when plants are being grown for food, it may be desirable to select starting materials which do not contain undesirable contaminants, such as harmful bacteria, so as to prevent such contaminants from entering the human supply chain.

Without intending to be limiting, the applicant has sourced fungal dominated forest humus which has tremendous beneficial microbial diversity, and also includes various different micronutrients including in particular calcium, magnesium, copper, zinc, manganese and iron in quantities which are optimal for promoting healthy plant growth. The term "fungal dominated" as used herein means greater colony forming units of fungi than bacteria. The fungi found in fungal dominated forest humus aid in supressing pathogenic organisms and in creating healthy soil biology. In addition, the fungal dominated forest humus starting material includes smaller quantities of available nitrogen, phosphorus, potassium, and boron which again support the healthy growth of plants. Importantly, the forest humus source identified by the applicant for producing the bio-stimulant product does not contain harmful bacteria or plant disease pathogens, according to analyses conducted on the starting material.

While the above description of the specific starting material, comprising fungal dominated forest humus identified by the applicant, is an example of an appropriate starting material for the bio-stimulant production disclosed herein, it will be appreciated by a person skilled in the art that other appropriate starting materials may not contain these exact components, may include other components, and are intended to be included in the scope of the present disclosure. For example, other appropriate starting materials may contain different mixtures of microorganisms and micronutrients, or may not have any micronutrients or negligible amounts of micronutrients. Other examples of compounds or substances in a starting material that may be useful include fluvic and humic acid, which may increase the absorption of the microorganisms by the carrier, in the processes described below.

Once an appropriate starting material has been identified, the process for producing a bio-stimulant, in one aspect of the present disclosure, includes preparing a first mixture comprising the identified starting material, a first carbohydrate, and water (step 14). Carbohydrates are a fuel source for microorganisms and play an important role in the growth and multiplication of microorganisms. Adding carbohydrates to the starting material is an important step for promoting the growth of the beneficial microorganisms. Without intending to be limiting, the first carbohydrate may be at least one starch. The prepared first mixture is placed into a microorganism growth environment for a given time interval so as to facilitate the growth and multiplication of the microorganisms which exist in the starting material. For example, for producing a bio-stimulant which includes rhizobacteria and mycorrhizal fungi spores, the first mixture would include a starting material which has rhizobacteria and mycorrhizal fungi. Without intending to be limiting, an example for the ratio of components in the aqueous mixture would be approximately 80% starting material, 10% water and 10% carbohydrate by volume.

As mentioned above, carbohydrates fuel the growth of the microorganisms. Without intending to be limiting, an appropriate carbohydrate may include, for example, oats, rice, but may include any other type of carbohydrate, including barley, grains, potato meal, cornstarch, coconut husks, peat, woodchips, corn or any other appropriate carbohydrate for promoting the growth of the targeted microorganisms, such as bacteria and fungi. Another carbohydrate source may include brewery waste, otherwise referred to as spent grain or leftover beer mash. Optionally, the carbohydrates may be ground up so as to increase the surface area of the carbohydrates in the aqueous mixture for the beneficial microorganisms to feed upon. In other embodiments in which a remediation product is produced, the food source for a remediation product containing nitrate-reducing bacteria may include chicken manure or other appropriate materials containing nitrate for the nitrate-reducing bacteria to feed upon.

Once the first mixture has been prepared, it is placed in a microorganism growth environment which promotes the growth of the beneficial microorganisms that are desired to be produced (step 16). For example, the applicant has found that placing the first mixture into a dark environment in which there is no light or air, combined with maintaining a temperature in that environment of approximately 30°C for a first time interval of approximately one week effectively enables the beneficial microorganisms to multiply to the required concentrations for producing the bio-stimulant. However, it will be appreciated by a person skilled in the art that other microorganism growth environments may be appropriate for promoting the growth of beneficial microorganisms. For example, the temperature may vary in the range between 5°C and 40°C, depending on the particular types of microorganisms being grown. In other embodiments, for example, for producing remedial products containing bacteria, the temperature range may be between 15°C and 40°C, depending on the type of bacteria being grown. In other example embodiments, the first mixture is maintained at low temperatures, such as at temperatures of below 5°C, or below 0°C, or below -10°C, or below -20°C. In some embodiments, the first mixture is maintained at a temperature between about -10°C to about 30°C. The inventors have discovered that lower temperatures promote the growth of certain types of microorganisms such as certain types of fungi that may be desirable in certain applications. The microorganism growth environment need not be entirely aneraboic. In some embodiments, the microorganisms are placed in an environment which contains some oxygen.

The time interval for the microorganisms' growth need not be limited to seven days, and for example may be approximately in the range of four to fourteen days. The specific growing conditions for promoting microorganism growth may vary depending on the type of microorganisms which are being cultivated for the bio-stimulant or remediation product. The term "cultivate" as used herein means to grow. However, in the applicant's experience, in the embodiments for producing a bio-stimulant containing a diverse group of microorganisms, for example, comprising *torulaspora delbruekii, acetobacter indonesiensis, acetobacter orientalis, acetobacter melorum,* and *sporolactobacillus nakayamae,* or comprising *lactobacillus mali, paenibacillus glycanilyticus, pichia membranifaciens, pichia manshurica, candida boidinii, lachancea fermentati,* or comprising *arthrobacter sp., candida membranifaciens, leuconostoc mesenteroides, penicillium canescens, geotrichum candidum,* or comprising *torulaspora delbruekii, bacillus subtilis, leuconostoc mesenteroides, brevibacterium frigoritolerans,* or comprising *pichia membranifaciens, wickerhamomyces anomalus, weissella paramesenteroids, bacillus megaterium, leuconostoc mesenteroides, raoultelle ornithinolytica,* leaving the aqueous mixture in a lightless environment at a temperature of approximately 30°C. for approximately two to four weeks has produced sufficient microorganism growth for further processing to produce a bio-stimulant containing a diverse group of microorganisms.

Once the first mixture contains sufficient amounts of targeted beneficial microorganisms, a second carbohydrate, for example, at least one sugar, is added to the first mixture to form a second mixture (step 18), and then the second mixture is placed into an environment adjusted for fermentation purposes for a second time interval (step 20). For example, without intending to be limiting, sugar may be introduced to the second mixture at a ratio of one part sugar to two parts aqueous solution, by volume. The addition of sugar to the second mixture enables fermentation of the mixture. The applicant has found that this process produces a substantially homogenous, viscous mixture, without chunks of humus or other starting material. Any type of sugar may be used for the fermentation process and is intended to be included in the scope of the present disclosure. Without intending to be limiting, different types of sugars which may be added include cane sugar, beet sugar, molasses, or other appropriate types of sugar for encouraging fermentation. The fermentation promoting environment may include, for example, placing the second mixture with the sugar added into a dark environment in which there is no light or air (i.e., oxygen), and maintaining the temperature of the environment in the range of from about -10°C to about 40°C, for embodiments to produce bio-stimulants containing a diverse group of microorganisms comprising, for example, *torulaspora delbruekii, acetobacter indonesiensis, acetobacter orientalis, acetobacter melorum,* and *sporolactobacillus nakayamae,* or *lactobacillus mall, paenibacillus glycanilyticus, pichia membranifaciens, pichia manshurica, candida boidinii, lachancea fermentati,* or comprising *arthrobacter sp., candida membranifaciens, leuconostoc mesenteroides, penicillium canescens, geotrichurn candidum, or torulaspora delbruekii, bacillus subtilis, leuconostoc mesenteroides, brevibacterium frigoritolerans,* or *pichia membranifaciens, wickerhamomyces anomalus, weissella paramesenteroids, bacillus megaterium, leuconostoc mesenteroides, raoultelle ornithinolytica.* The second time interval, for example without intending to be limiting, may be approximately one to two weeks. In other embodiments for producing remedial products containing bacteria, the environment may be maintained at a temperature in the range of 15°C to 40°C. The fermentation process also results in the production of volatile fatty acids, enzymes, and metabolites, which all play a role in disease suppression and are used by microorganisms to assist with reproduction and growth. In addition to facilitating fermentation, the applicant suspects the addition of sugar at this stage in the process may play a further role in extending the shelf life of the final bio-stimulant product, by providing a food source for the beneficial microorganisms. For example, without intending to be limiting, the shelf life of the final bio-stimulant product may be in the approximate range of one to two years. It will be appreciated by a person skilled in the art that the fermentation step described above, may be carried out more than once.

The fermentation step (step 20) may be performed in the presence of at least some air (i.e., oxygen). In some embodiments, the fermentation step (step 20) need not occur in a completely anerobic environment. In some embodiments, additional water is not added to form the second mixture prior to the fermentation step (step 20), i.e., the fermentation step occurs after a second carbohydrate is added to the first mixture without the addition of water.

In some embodiments, method 10 is performed at a temperature in the range of from about - 20°C to about 40°C. In some embodiments, method 10 is performed at a temperature in the range of about 20°C to about 35°C.

Once the fermentation is complete, the bio-stimulant is produced. In some embodiments, the fermentation is complete when the pH of the fermented mixture is below about 5, or below about 4.

The bio-stimulant may comprise one or more types of facultative anaerobic microorganisms. Facultative anaerobic microorganisms are microorganisms which do not require oxygen in the environment to survive. In some embodiments, the microorganisms contained in the bio-stimulant are substantially or in some embodiments essentially facultative anaerobic microorganisms. Facultative anerobic microorganisms may for example be certain types of bacteria or fungi. Non-limiting examples of facultative anerobic organisms include *Staphylococcus spp., Escherichia coli, Salmonella, Listeria spp., Shewanella oneidensis, Yersinia pestis,* and *Saccharomyces cerevisiae.*

Following fermentation, a carrier, such as water, zeolite, biochar, woodchips, or diatomaceous earth may be added to the bio-stimulant (step 22). It will be appreciated by a person skilled in the art that various types of material can be used as a carrier for the bio-stimulant product. Incorporation of the beneficial microorganism in a carrier enables easy handling and long term storage. Furthermore, the carrier can alter the pH of the soil. Soil pH can impact plant growth in several ways. Different microorganisms function best at different pH ranges. Soil pH may also impact the availability of micronutrients and minerals. By utilizing the appropriate carrier, the bio-stimulant can be customized to achieve an optimal pH growth environment for the targeted plant.

Once inoculated, zeolite and woodchips have an acidic pH and thus may be the carriers of choice when acidic conditions are optimal for plant health and growth. Water and diatomaceous earth, on the other hand, have a neutral pH. Biochar is alkaline and can be used to buffer acidity in soil, when an alkaline environment is optimal for the targeted plant. When zeolite, biochar, woodchips, or diatomaceous earth is chosen as the carrier, then a further step of drying the carrier may be carried out, so as to remove any access water from the carrier.

The applicant has found, in some aspects of the present disclosure, that the selection of an appropriate carrier will affect the final characteristics of the bio-stimulant product. For example, zeolites are alumina silica structures which provide a rigid crystalline network, whereby zeolite particles include pores and therefore have a large surface area compared to other types of crystalline structures. Biochar is a charcoal like product which is extremely porous in nature. Advantageously, both zeolites and biochar, having a large surface area are able to absorb and/or adsorb microorganisms, including fungal spores, as well as micronutrients, from the aqueous mixture. An additional benefit of zeolites and biochar is that they also absorb and/or adsorb water molecules into their pores and release the water molecules over time, which improves the water retention properties of the soil being treated with the bio-stimulant.

Depending on the particular environment to be remediated, such as a body of water, carriers other than zeolite and biochar, or in addition to zeolite or biochar, may be used in the production of a remediation product. For example, for remediating a body of water, a carrier which floats or which may be suspended in water may be selected. Examples of carriers other than zeolite may include different types of clays, talc powders, charcoals or a combination of any of these carriers.

During this stage of the process, the carrier is combined with the bio-stimulant at a ratio, for example, of approximately one part bio-stimulant, ten parts carrier and ten parts water by volume. Once the carrier has absorbed and/or adsorbed a sufficient amount of beneficial microorganisms and micronutrients, the carrier may be separated from the aqueous mixture, for example by filtering the carrier containing mixture through a sieve or screen. The recovered carrier is then dried so as to remove excess water and obtain the final bio-stimulant product. The drying process may occur, for example, in the dark (or in the absence of light in the UV spectrum), with dehumidifiers, for a period of time, which may take up to three days for example. Preferably, the drying process occurs in a temperature controlled environment, for example in the range of 15°C. It will be appreciated by a person skilled in the art that other drying procedures may be used and are intended to be included in the present scope of this disclosure. The aqueous mixture that is separated from the carrier may optionally be used as a liquid bio-stimulant product, as a certain amount of micronutrients and/or beneficial microorganisms remain within the aqueous solution.

In other aspects of the present disclosure, where it is desired to add micronutrients to the bio-stimulant, the careful selection of an appropriate starting material which contains those micronutrients may result in bio-stimulants including concentrations of those desired micronutrients. Therefore, in some embodiments of the present disclosure, it is not necessary to provide an additional source of micronutrients in the manufacture of the bio-stimulant because an appropriately selected starting material may already include those desired micronutrients. In other embodiments of the present disclosure, where the starting material does not contain the desired micronutrients or does not contain the desired concentration of micronutrients, such micronutrients may simply be introduced into the mixture during the manufacture process of the bio-stimulant, or may be included in the selected carrier to be added during the manufacture process. The addition of micronutrients may occur at any step in the process of producing the bio-stimulant.

In other aspects of the present disclosure, in addition to creating bio-stimulants for introducing beneficial microorganisms and optionally, micronutrients to the soil, other applications of the bio-stimulant product are available.

The bio-stimulant product may be applied to seeds as a seed inoculant. For example, without intending to be limiting, the bio-stimulant product, wherein the carrier is liquid, may be sprayed onto the seeds. The seeds may then, within 24 hours of being sprayed with the bio-stimulant product, be planted in the appropriate growth medium.

The bio-stimulant may be applied to manure or digestate to convert manure into fertilizer. For example, without intending to be limiting, manure or digestate may be soaked in the bio-stimulant product, wherein the carrier is liquid, for up to 2 weeks in large holding tanks. Then, the bio-stimulant and manure mixture may be pumped through a centrifuge, separating the mixture into a liquid and solid component. The solid component, made up of approximately 2 parts potassium, 2 parts phosphate and 2 parts nitrogen, may be used as a fertilizer. The liquid component, containing high concentrations of potassium, may have many uses in agriculture, as potassium plays a crucial role in a number of physiological processes vital to growth, health and yield of crops. Furthermore, application of the bio-stimulant product to the manure helps reduce odor.

Advantageously, the bio-stimulant product is a biological pesticide and may be used as a fungicide or bactericide. For example, mildew is a fungal disease affecting plants, characterized by a white coating on the surface of the affected parts of the plant. Mildew results in poor plant growth and lower yields. The applicant has found spraying affected plants with the bio-stimulant product wherein the carrier is liquid, and the product includes a plurality of beneficial microorganisms results in eradication of mildew. The method for producing the bio-stimulant product disclosed herein, has led to the discovery of a diverse plurality of groups of beneficial microorganisms that work synergistically to boost plant immunity and fight plant disease. A person skilled in the art would appreciate that the bio-stimulant product, wherein it contains a specific group of beneficial microorganisms, may be replicated in a bioreactor for use as a fungicide. For example, without intending to be limiting, for the treatment of mildew, the following group of beneficial microorganisms are successful at eradicating the disease: *torulaspora delbruekii, acetobacter indonesiensis, acetobacter orientalis, acetobacter melorum,* and *sporolactobacillus nakayame.*

The bio-stimulant product may also be used as a tool to promote animal health and growth by boosting animals' immune systems. Beneficial microorganisms found in the bio-stimulant product can help reduce or even eliminate disease-causing bacteria which may be found on an animal's skin, fur or feathers, or intestine, for example. When ingested, the bio-stimulant product may function as a probiotic, aiding in restoring the animal's natural balance of gut bacteria. The applicant has found that spraying livestock with the bio-stimulant product, wherein the carrier is liquid, results in weight gain without increasing the animals' diets. Furthermore, the applicant has found the use of the bio-stimulant product reduced the mortality rate of sick livestock, and overall resulted in healthier and stronger animals. The fungicidal and bactericidal properties of the bio-stimulant further allow the product to be used to clean production facilities, for example, a barn. The use of the bio-stimulant product results in accelerated composting of manure.

Other possible applications for the processes described herein include loading a carrier, such as zeolite or biochar, with other types of bacteria for remediating contaminated water, or for removing sour gas from sour gas wells or other types of wellheads. For example, without intending to be limiting, remediation products which contain oleispira antarctica bacteria may be used for consuming oil spills in cold water, alcaninvorax borkumensis bacteria for consuming oil spills in warm water, or nitrate-reducing bacteria which may consume hydrogen sulphide in sour gas wellheads or other types of wellheads. Without intending to be limiting, appropriate starting materials for producing a remediation product containing nitrate-reducing bacteria may include, for example, chicken manure. It will be appreciated by a person skilled in the art that various types of organic materials containing specific types of bacteria may be used as starting materials to produce bio-stimulant products or remediation products.

In a preferred embodiment of the present disclosure, the pH of the bio-stimulant product may be in the range of 3 to 4, as pathogenic microorganisms do not survive in acidic environments.

Wherein the bio-stimulant product is liquid (i.e. the carrier is liquid), it may preferably be stored in anaerobic, pressurized conditions, such as in a keg, or other similar pressurized container or vessel, with a one way valve. The applicant has found that the beneficial microorganisms survive longer in the anaerobic, pressurized environment, so as to increase the shelf life of the bio-stimulant product. Further, delivery from, for example, a keg, which maintains the controlled environment via the one way valve, and prevents air from contacting the bio-stimulant product, allows the product to be used on an as needed basis.

In some embodiments of this invention, the bio-stimulant product includes only or consists essentially of microbes or microbial consortia isolated from the natural environment (e.g., from the soil or humus of a thriving plant). In such embodiments, the bio-stimulant product does not contain laboratory strains of microorganisms (i.e., microorganisms that are grown in laboratories).

### Methods of Producing Fertilizer Compositions

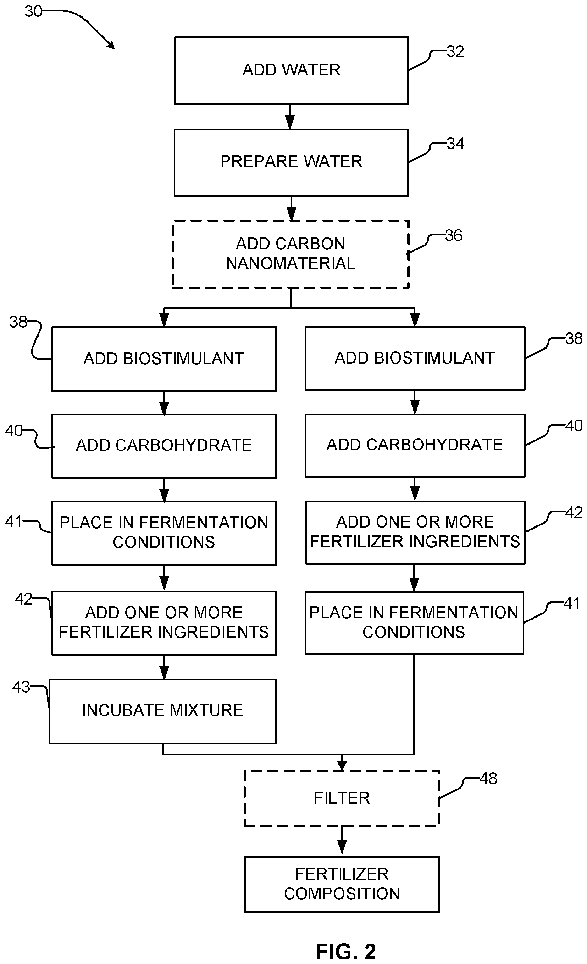

The bio-stimulant product of the present invention may be used as a starting culture for producing a fertilizer composition. Figure 2 illustrates a method 30 of producing a fertilizer composition using the bio-stimulant as the starting culture according to an example embodiment. Referring to Figure 2, the method 30 comprises adding water to a bioreactor optionally comprising a release valve (step 32) and preparing the water (step 34) to create an environment that is favourable for fermentation. An environment that is favourable for fermentation may include reducing the pH within the bioreactorto an acidic environment, such as a pH of about 2.0 to 8.5, or preferably between 2.5 to 5.5. In example embodiments, the water is prepared by adding dry ice (i.e., a solid form of carbon dioxide CO₂) to the water within the bioreactor. The dry ice dissolves in water to create carbonic acid (H₂CO₃), thereby reducing the pH within the bioreactor. In one example embodiment, 10 pounds (Ibs) of dry ice per thousand liters (L) of water is added to the bioreactor.

In some embodiments of the method, a carbon nanomaterial is added to the prepared water (step 36). The carbon nanomaterial may be in the form of one or more of carbon nanotubes (CNT), which includes single-walled carbon nanotubes (SWCNTs) and double-walled carbon nanotubes (SWCNTs), graphene, fullerenes (C₆₀), carbon nanoonions (CNOs), nanorods, graphene quantum dots (GQDs), photoluminescent carbon dots (CDs) and the like. In an example embodiment, the carbon nanomaterial is a carbon nanotube.

The carbon nanomaterial may be treated before adding to the prepared water. In some embodiments, the carbon nanomaterial may be treated by sonication or other suitable means to promote the dispersion of the nanomaterials. The carbon nanomaterial may be dispersed in a dispersion liquid. The dispersion liquid may for example include a solvent (e.g,, water or an organic solvent such as alcohol) and/or surfactant. In some embodiments, the surfactant is a polymeric surfactant. In an example embodiment, the surfactant is a cellulose-based polymeric surfactant. Other suitable surfactants such as cetyltrimethylammonium bromide, Triton X-100, sodium dodecylbenzene sulfonate (SDBS) may also be used. The surfactant may be added to the carbon nanomaterial in the treatment step (i.e., as a dispersion liquid), or after the treatment step. For example, the surfactant may be added to the dispersed carbon nanomaterial after the sonication step before or after the dispersed carbon nanomaterial has been added to the bioreactor.

In example embodiments, the concentration of carbon nanomaterials is about 0.01 wt % to about 0.2 wt %, and in some embodiments between about 0.02 wt % and about 0.08 wt %.

In step 38, the bio-stimulant is added to the prepared water. In example embodiments in which the surfactant comprises cellulose, the mixing of the carbon nanomaterials dispersed in cellulose with the bio-stimulant may result in the digestion of the cellulose by the microbes contained in the bio-stimulant, thereby releasing and distributing the carbon nanomaterials in the mixture. One or more carbohydrates may be added to the bio-stimulant to promote the growth of the microorganisms contained in the bio-stimulant (step 40). The carbohydrate may be a complex carbohydrate, i.e., polymeric carbohydrates comprising a plurality of glucose units that are joined together by glycosidic bonds. An example is starch, such as oats, rice, barley, grains, potato meal, cornstarch, coconut husks, peat, woodchips, corn or any other appropriate carbohydrates for promoting the growth of microorganisms.

In some embodiments, the mixture comprising the prepared water, bio-stimulant, and carbohydrate is subject to a fermentation step under fermentation conditions for a time interval to produce an expanded culture (step 41). Example fermentation conditions include in the presence or absence of oxygen, at a temperature of about -20°C to about 40°C, at a pH of about 2.2 to about 6, and/or under lightless conditions. In one example embodiment, the mixture is fermented at a temperature of about 20°C to about 35°C and a pH of from about 2.5 to about 4.5. The time interval of the fermentation step may be the amount of time it takes for the pH of the mixture to be reduced to lower than about 5, or more preferably lower than about 4.

In some embodiments, one or more fertilizer ingredients are added to the bioreactor (step 42). The types of the one or more fertilizer ingredients and/or the concentration of the one or more fertilizer ingredients to add to the bioreactor may be selected based on the desired treatment. The desired treatment may for example be stimulating the growth of specific crop types, or targeting specific needs, such as seed treatment, stress resistance and tolerance, improve soil structure and fertility, and fungal or pest treatment. The one or more fertilizer ingredients and the concentrations of each to add may also be selected based on the blend of nutrients or the balance of nutrients (e.g., the specific ratio of nitrogen-phosphorus-potassium (NPK)) desired in the composition. The one or more fertilizer ingredients may include one or more of macronutrient sources (i.e., elements that supply one or more of nitrogen (N), phosphorus (P), potassium (K), calcium (Ca), magnesium (Mg), and sulfur (S)), micronutrient sources (i.e., elements that supply one or more of boron (B), copper (Cu), iron (Fe), chloride (CI), manganese (Mn), molybdenum (Mo) and zinc (Zn)), growth promoters, minerals, vitamins, amino acids, polysaacharides, or any other ingredients that may be useful to the treatment of crops such as for growth, survival, and/or repair. In some embodiments, the one or more fertilizer ingredients are sourced from one or more organic materials such as manure and agricultural waste, or other biomass, living organisms such as a plant (e.g., algae and herbs such as mint, oregano), minerals (e.g., zeolite), fermented products (e.g., alcohol and vinegar) and compounds including organic componds such as organic acids (e.g., humic acid, fulvic acid, acetic acid, and citric acid), urea (CO(NH₂)₂), alcohol, and inorganic compounds such as inorganic acids (e.g., phosphoric acid) and metal salts (e.g., ammonium sulfate, ammonium phosphate, potassium nitrate, ammonium nitrate, potassium sulfate, potassium nitrate and calcium nitrate).

In some embodiments, the one or more fertilizer ingredients are added to the bioreactor before the fermentation step such that the fertilizer ingredients, together with the mixture comprising the prepared water, bio-stimulant, and carbohydrate are subject to fermentation to form a fermented mixture. In some embodiments, the one or more fertilizer ingredients or additional fertilizer ingredients are added to the bioreactor after the fermentation step such that the one or more fertilizer ingredients or additional fertilizer ingredients are added to the fermented mixture (step 44).

The carbon nanomaterial (where present), bio-stimulant, carbohydrate, and the one or more fertilizer ingredients may be added to the bioreactor to mix with the prepared water (i.e., steps 36, 38, 40, 42) in any suitable order.

In some embodiments, the expanded culture and the one or more fertilizer ingredients or additional fertilizer ingredients may be incubated under conditions that are favourable to facilitate the conversion of one or more compounds by the microorganisms contained in the fermented mixture (step 43). Such conversion may for example be the conversion of inorganic compounds to their organic forms, or organic compounds to their inorganic forms. In an example embodiment, the fertilizer ingredients are incubated with the fermented mixture under anerobic conditions so as to allow the microorganisms to convert inorganic nitrogen compounds to organic forms through fixation. In another example embodiment, the fertilizer ingredients are incubated with the fermented mixture under conditions that are favourable in facilitating the microorganisms to convert organic phosphorus to available phosphorus.

The fermented mixture may be filtered to separate the solid and liquid fractions, one or both of which may be applied to crops (step 48). The fermented mixture may be further processed. In example embodiments, the fermented mixture is further processed by granulation or pelletized by any suitable methods to form fertilizer particles. Alternatively, the fermented mixture is applied directly to crops.

### Non-limiting Example Methods

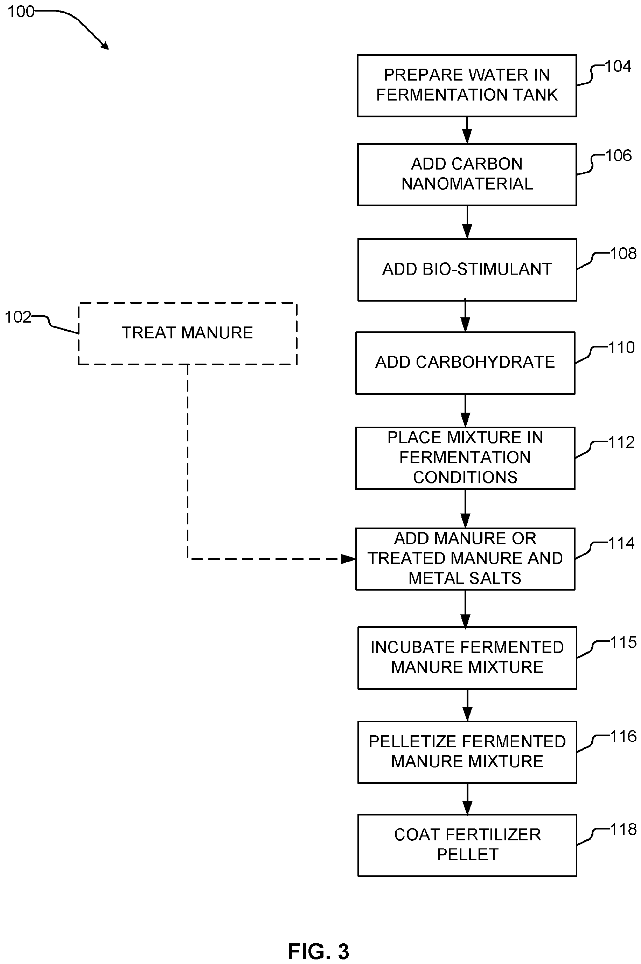

The method 30 may be used to produce different fertilizer compositions. Figures 3 to 7 illustrate example methods which incorporate different combinations of fertilizer ingredients with the bio-stimulant to produce different fertilizer compositions.

Figure 3 illustrates an example method 100 of producing a fertilizer composition using manure as one of the fertilizer ingredients. Referring to Figure 3, the manure may be treated prior to inoculation into the bioreactor (step 102). In example embodiments, the manure is treated by separating (e.g., by any suitable solid-liquid separation means such as gravity or mechanical systems) the liquid manure from the solid manure. In such embodiments, the separation of the liquid manure from the solid manure separates out minerals such as potassium and/or salts in the liquid manure, thereby creating fermented products with low concentrations of potassium. Such fermented products may comprise high concentrations of nitrogen. In other embodiments, the manure is not treated before adding to the bioreactor. In such embodiments, fresh manure is added to the bioreactor. The resulting fermented products prepared from fresh manure may have high concentrations of potassium. Water is prepared (step 104), and optionally, a carbon nanomaterial is added to the prepared water (step 106). The bio-stimulant and carbohydrates are added to the bioreactor to combine with the prepared water (steps 108, 110), and the mixture is then subjected to fermentation under fermentation conditions for approximately one week to three weeks to produce an expanded culture (step 112). The fertilizer ingredients, specifically, the solid manure and one or more metal salts such as ammonium phosphate and ammonium sulphate are added to the expanded culture to form a fermented manure mixture (step 114). The fermented manure mixture may then be incubated under anerobic conditions until use (step 115). The incubated fermented manure mixture may then be separated into liquid and solid fractions, one or both of which may be applied to crops.

In some embodiments, the incubated fermented manure mixture is further processed to form a granulated product. For example, the incubated fermented manure mixture may be treated by a granulation or pelletizing process so as to agglomerate the incubated fermented manure mixture into granules or pellets (step 116). The granules or pellets may optionally be coated with an effective concentration of the bio-stimulant product, carbon nanomaterials, or a combination thereof (step 118).

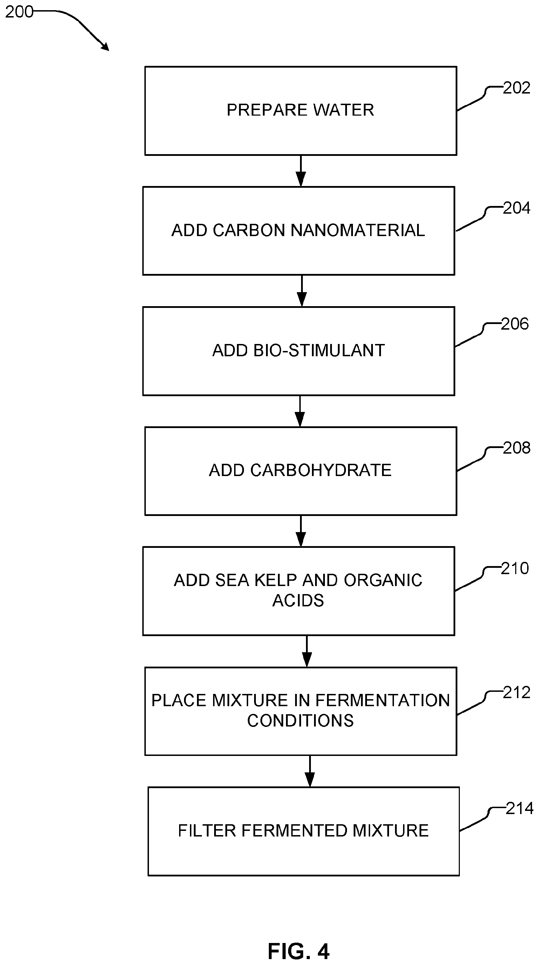

Figure 4 illustrates an example method 200 of producing a fertilizer composition using sea kelp and one or more organic acids such as humic acid, fulvic acid, acetic acid and/or citric acid as the fertilizer ingredients. Referring to Figure 4, water is prepared (step 202), and a carbon nanomaterial is added to the prepared water (step 204). The bio-stimulant, carbohydrates, and one or more fertilizer ingredients including sea kelp and a mixture of organic acids including humic acid, fulvic acid, acetic acid and/or citric acid are added to the bioreactorto mix with the prepared water (steps 206, 208, 210). The mixture is then subjected to fermentation under fermentation conditions for approximately one week to produce a fermented mixture (step 212). The fermented mixture is removed from the bioreactor and is filtered (step 214) prior to application.

The fertilizer composition prepared by the method 200 may have application in crop seed treatment such as to stimulate root mass and to protect from pathogens.

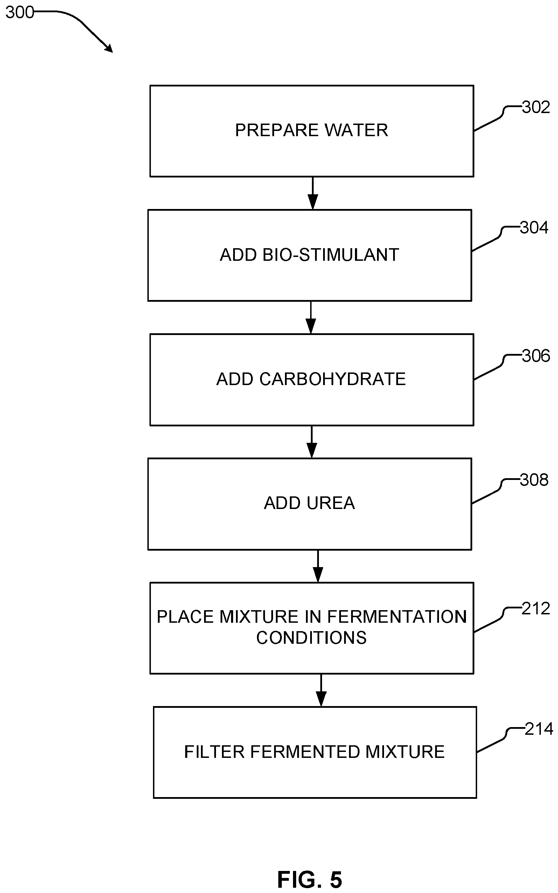

Figure 5 illustrates an example method 300 of producing a fertilizer composition using urea as the fertilizer ingredients. Referring to Figure 5, water is prepared (step 302). The biostimulant, carbohydrates, and urea are added to the bioreactor to mix with the prepared water (steps 304, 306, 308). The mixture is then subjected to fermentation under fermentation conditions for approximately one week to produce a fermented mixture (step 310). The fermented mixture is removed from the bioreactor and is filtered (step 312) prior to application.

The fertilizer composition prepared by the method 300 may have application in stimulating growth of hay bales and silage.

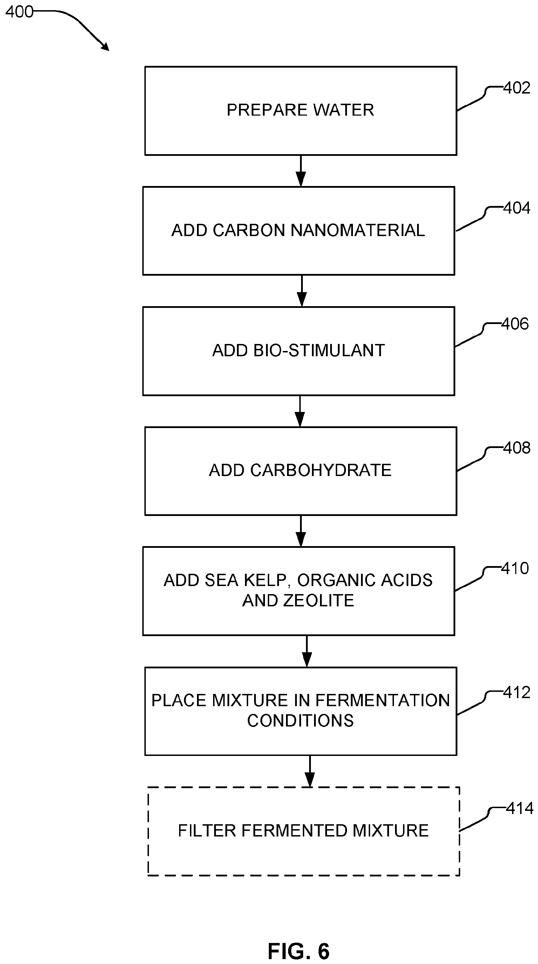

Figure 6 illustrates an example method 400 of producing a fertilizer composition using sea kelp, one or more organic acids such as humic acid, fulvic acid, acetic acid and/or citric acid, zeolite and one or more metal salts such as ammonia sulphate and/or ammonium nitrate as the one or more fertilizer ingredients. Referring to Figure 6, water is prepared (step 402). The bio-stimulant, carbohydrate, carbon nanomaterial, and the one or more fertilizer ingredients including sea kelp, humic acid, fulvic acid, acetic acid and citric acid, zeolite, and ammonium sulphate are added to the bioreactorto mix with the prepared water (steps 404, 406, 408, 410). The mixture is then subjected to fermentation under fermentation conditions for approximately one week to produce a fermented mixture (step 412). The fermented mixture is removed from the bioreactorand may be filtered (step 414) prior to application.

The fertilizer composition prepared by the method 400 may have application in facilitating the break down of residues or organic compounds in the soil thereby producing available nutrients for crops.

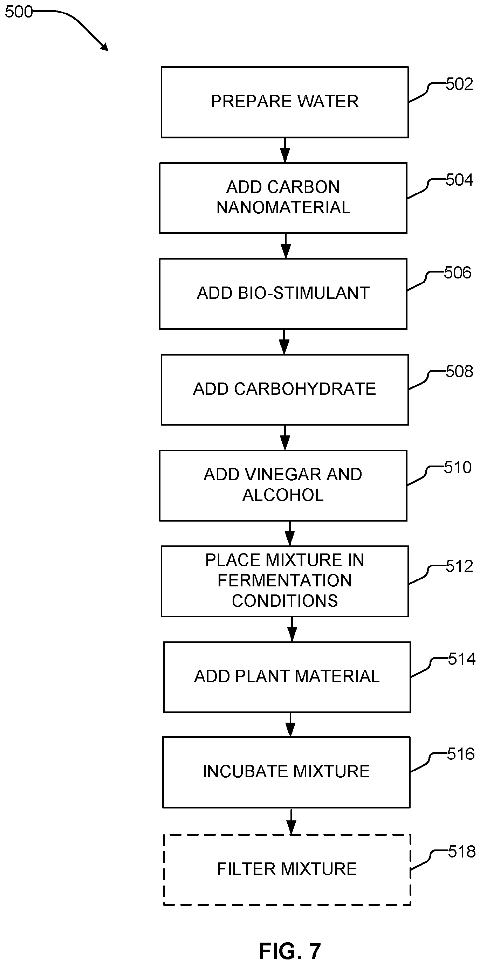

Figure 7 illustrates an example method 500 of producing a fertilizer composition using vinegar, alcohol, and one or more plant materials (such as mint and oregano) as the one or more fertilizer ingredients. Referring to Figure 7, water is prepared (step 502), and the carbon nanomaterial is added to the prepared water (step 504). The bio-stimulant, carbohydrate (such as honey and molasses), vinegar and alcohol are added to the fermentation to mix with the prepared water and carbon nanomaterial (steps 506, 508, 510). The mixture is then subjected to fermentation under fermentation conditions for approximately one week to approximately two weeks to produce a fermented mixture (step 512). One or more of the plant materials may be added to the fermented mixture (step 514), and the mixture comprising the plant materials and fermented mixture may be incubated between about 20 to about 30°C under anerobic conditions for a time period, with carbon dioxide gas (CO₂) being released during the incubation period (step 516). The time period may for example be one to two weeks, or until no further gas is being produced. The fermented mixture is removed from the bioreactor and may be filtered (step 518) prior to application.

The fertilizer composition prepared by the method 500 may have application in preventing and/or treating pests in the soil and/or crops.

### Fertilizer Compositions

Aspects of the invention relate to fertilizer compositions prepared by the method 30 illustrated in Figure 2. The fertilizer compositions include a fermented bio-stimulant product comprising a diverse plurality of groups of microorganisms and optionally a carrier. In example embodiments, the concentration of the fermented bio-stimulant product contained in the fertilizer composition is in the range of from 5% w/w to about 25% w/w. In some embodiments, the total colony forming unit (CFU) in the fertilizer compositions is in the range of from about 100,000 to about 10,000,000.

The fertilizer compositions comprise a carbon nanomaterial having a concentration in the range of from about 0.01% to approximately 0.5% w/w, and between about 0.04% and about 0.08% w/w in some embodiments.

The fertilizer compositions may include one or more fertilizer ingredients in combination with the fermented bio-stimulant product. In example embodiments, the concentration of the one or more fertilizer ingredients contained in the fertilizer composition is in the range of from about 5% w/w to 20% w/w.

In an example embodiment, the fertilizer ingredients include one or more metal salts. The concentration of the one or more metal salts contained in the fertilizer composition is in the range of from about 5% w/w to about 10% w/w. In example embodiments, the one or more metal salts comprise ammonium phosphate and ammonium sulphate.

In another example embodiment, the fertilizer ingredients include a mixture of sea kelp and one or more organic acids. The concentration of sea kelp contained in the fertilizer composition is in the range of from about 0.05% w/w to about 1% w/w. The concentration of the one or more organic acids contained in the fertilizer composition is in the range of from about 0.05% w/w to about 1% w/w. In example embodiments, the one or more organic acids comprise humic acid, fulvic acid, acetic acid and citric acid.

In another example embodiment, the fertilizer ingredient includes urea. The concentration of urea contained in the fertilizer composition is in the range of from about 5% to about 10% w/w.

In another example embodiment, the fertilizer ingredients includes a combination of sea kelp, one or more organic acids, zeolite and one or more metal salts. The concentration of sea kelp contained in the fertilizer composition is in the range of from about 0.05% w/w to about 1 % w/w. The concentration of the one or more organic acids contained in the fertilizer composition is in the range of from about 0.05% w/w to about 1% w/w. The concentration of zeolite contained in the fertilizer composition is in the range of from about 1% w/w to about 99% w/w. In example embodiments, the one or more organic acids comprise humic acid, fulvic acid, acetic acid and citric acid, and the one or more metal salts comprise ammonium sulphate or ammonium nitrate.

Throughout the foregoing description and the drawings, in which corresponding and like parts are identified by the same reference characters, specific details have been set forth in order to provide a more thorough understanding to persons skilled in the art. However, well known elements may not have been shown or described in detail or at all to avoid unnecessarily obscuring the disclosure.

As will be apparent to those skilled in the art in the light of the foregoing disclosure, many alterations and modifications are possible in the practice of this invention without departing from the scope thereof. Accordingly, the description and drawings are to be regarded in an illustrative, rather than a restrictive, sense.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

The invention will now be defined by reference to the following clauses:
1. A method of producing an environmental bio-stimulant comprising the steps of:
   (a) preparing a first mixture comprising a starting material, a first carbohydrate and water, wherein the starting material is obtained from a natural environment and comprises at least one microorganism;
   (b) placing the first mixture in a microorganism growth environment for a first time interval so as to cultivate the at least one microorganism;
   (c) preparing a second mixture by adding a second carbohydrate to the first mixture; and
   (d) fermenting the second mixture in a fermentation environment for a second time interval so as to produce the bio-stimulant containing a plurality of microorganisms.
2. The method according to clause 1, wherein the plurality of microorganisms consists essentially of microorganisms that originate from the natural environment.
3. The method according to clause 1, wherein the plurality of microorganisms consists essentially of facultative anerobic microorganisms.
4. The method according to any preceding clause, wherein the natural environment is soil or humus.
5. The method according to any preceding clause, further comprising the step of (e) adding a carrier to the bio-stimulant after the step of fermenting the second mixture.
6. The method according to clause 5, wherein the carrier is one or more of water, zeolite, biochar, woodchips, and diatomaceous earth.
7. A method of producing a fertilizer composition comprising the steps of:
   (f) preparing water by reducing a pH of the water;
   (g) preparing a third mixture by adding the bio-stimulant produced from the method according to claim 1 and a third carbohydrate to the prepared water;
   (h) fermenting the third mixture to produce a fermented mixture for a third time interval; and
   (i) adding one or more fertilizer ingredients to the third mixture before the step of fermenting the third mixture and/or to the fermented mixture after the step of fermenting the third mixture.
8. The method according to clause 7, further comprising the step of (j) adding a carbon nanomaterial to the prepared water prior to the step of fermenting the third mixture.
9. The method according to clause 8, wherein the carbon nanomaterial comprises a carbon nanotube (CNT).
10. The method according to clause 9, further comprising dispersing the carbon nanotube in cellulose prior to adding the carbon nanotube to the prepared water.
11. The method according to any one of clauses 7-10, wherein the one or more fertilizer ingredients comprise one or more of a macronutrient source and a micronutrient source.
12. The method according to any one of clauses 7-10, wherein the one or more fertilizer ingredients comprise one or more of an organic material, organic compound and inorganic compound.
13. The method according to clause 12, wherein the organic material is one or more of manure and a plant material.
14. The method according to clause 12, wherein the organic compound is one or more of organic acid and urea.
15. The method according to clause 12, wherein the inorganic compound is a metal salt.
16. The method according to any preceding clause, further comprising the step of (k) incubating the fermented mixture with the one or more fertilizer ingredients at an incubation temperature for a fourth time interval.
17. The method according to clause 16, wherein the step of incubating the fermented mixture with the one or more fertilizer ingredients is under anerobic conditions.
18. A fertilizer composition comprising:
   a fermented bio-stimulant product comprising a plurality of microorganisms having a concentration in the range of from about 5% w/w to about 25% w/w, wherein the plurality of microorganisms contained in the fermented bio-stimulant product essentially originates from a natural environment; and
   one or more fertilizer ingredients.
19. The fertilizer composition according to clause 18, wherein the total colony forming unit (CFU) in the composition is between 100,000 and 10,000,000.
20. The fertilizer composition according to clause 18 or 19, wherein the fertilizer composition comprises a carbon nanomaterial having a concentration in the range of from about 0.04% w/w to about 0.08% w/w.
21. The fertilizer composition according to any one of clauses 18-20, wherein the one or more fertilizer ingredients comprise one or more of an organic material, organic compound and inorganic compound.
22. The fertilizer composition according to any one of clauses 18-21, wherein the organic material is one or more of manure and a plant material.
23. The fertilizer composition according to any one of clauses 18-22, wherein the organic compound is one or more of organic acid and urea, and wherein the organic acid is selected from the group consisting of humic acid, fulvic acid, acetic acid, citric acid, and a combination thereof.
24. The fertilizer composition according to any one of clauses 18-23, wherein the one or more inorganic compound is a metal salt.

## Claims

1. A method of producing a fertilizer composition comprising the steps of:
(a) preparing water by reducing a pH of the water;
(b) preparing a third mixture by adding a bio-stimulant and a third carbohydrate to the prepared water, the bio-stiumulant produced by the steps of:
(c) preparing a first mixture comprising a starting material, a first carbohydrate and water, wherein the starting material is obtained from a natural environment and comprises at least one microorganism, wherein the natural environment is optionally soil or humus;
(d) placing the first mixture in a microorganism growth environment for a first time interval so as to cultivate the at least one microorganism;
(e) preparing a second mixture by adding a second carbohydrate to the first mixture; and
(f) fermenting the second mixture in a fermentation environment for a second time interval so as to produce the bio-stimulant containing a plurality of microorganisms;
(g) fermenting the third mixture to produce a fermented mixture for a third time interval; and
(h) adding one or more fertilizer ingredients to the third mixture before the step of fermenting the third mixture and/or to the fermented mixture after the step of fermenting the third mixture.

2. The method according to claim 1, wherein the plurality of microorganisms consists essentially of microorganisms that originate from the natural environment.

3. The method according to claim 1 or 2, wherein the plurality of microorganisms consists essentially of facultative anerobic microorganisms.

4. The method according to any one of claims 1 to 3, further comprising the step of (i) adding a carrier to the bio-stimulant after the step of fermenting the second mixture, wherein the carrier is optionally one or more of water, zeolite, biochar, woodchips, and diatomaceous earth.

5. The method according to any one of claims 1 to 4, further comprising the step of (j) adding a carbon nanomaterial to the prepared water prior to the step of fermenting the third mixture.

6. The method according to claim 5, wherein the carbon nanomaterial comprises a carbon nanotube (CNT).

7. The method according to claim 6, further comprising dispersing the carbon nanotube in cellulose prior to adding the carbon nanotube to the prepared water.

8. The method according to any one of claims 1 to 7, wherein the one or more fertilizer ingredients comprise one or more of a macronutrient source and a micronutrient source.

9. The method according to any one of claims 1 to 7, wherein the one or more fertilizer ingredients comprise one or more of an organic material, organic compound and inorganic compound, and wherein the organic material is optionally one or more of manure and a plant material, and wherein the organic compound is optionally one or more of organic acid and urea, and wherein the inorganic compound is optionally a metal salt.

10. The method according to any one of claims 1 to 9, further comprising the step of (k) incubating the fermented mixture with the one or more fertilizer ingredients at an incubation temperature for a fourth time interval.

11. The method according to claim 10, wherein the step of incubating the fermented mixture with the one or more fertilizer ingredients is under anerobic conditions.

12. A fertilizer composition comprising:
a fermented bio-stimulant product comprising a plurality of microorganisms having a concentration in the range of from about 5% w/w to about 25% w/w, wherein the plurality of microorganisms contained in the fermented bio-stimulant product essentially originates from a natural environment, wherein the fermented bio-stimulant product is produced by the steps of:
(a) preparing a first mixture comprising a starting material, a first carbohydrate and water, wherein the starting material is obtained from a natural environment and comprises at least one microorganism, wherein the natural environment is optionally soil or humus;
(b) placing the first mixture in a microorganism growth environment for a first time interval so as to cultivate the at least one microorganism;
(c) preparing a second mixture by adding a second carbohydrate to the first mixture; and
(d) fermenting the second mixture in a fermentation environment for a second time interval so as to produce the bio-stimulant containing a plurality of microorganisms; and
one or more fertilizer ingredients.

13. The fertilizer composition according to claim 12, wherein the total colony forming unit (CFU) in the composition is between 100,000 and 10,000,000.

14. The fertilizer composition according to claim 12 or 13, wherein the fertilizer composition comprises a carbon nanomaterial having a concentration in the range of from about 0.04% w/w to about 0.08% w/w.

15. The fertilizer composition according to any one of claims 12 to 14, wherein the one or more fertilizer ingredients comprise one or more of an organic material, organic compound and inorganic compound, and wherein the organic material is preferably manure and/or plant material, and wherein the organic compound is preferably one or more of organic acid and urea, and wherein the organic acid is optionally selected from the group consisting of humic acid, fulvic acid, acetic acid, citric acid, and a combination thereof, and wherein the one or more inorganic compound is a metal salt.
